# EUROPÄISCHE PATENTANMELDUNG

(11) **EP 3 675 069 A1**
(43) Veröffentlichungstag der Anmeldung: **01.07.2020**
(21) Anmeldenummer: 18248170.5
(22) Anmeldetag: 28.12.2018
(51) Int. Cl.: G07C 9/00, G06K 9/32, G06K 9/62, G06N 3/08, G06K 9/00

(54) **VERFAHREN ZUR ZUGANGSKONTROLLE VON PERSONEN ODER FAHRZEUGEN IN EINEM ZUGANGSKONTROLLSYSTEM**

(71) Anmelder: SKIDATA AG, 5083 Grödig/Salzburg (AT)
(72) Erfinder: Malmborg, Anders, 5083 Grödig/Salzburg (AT)
(74) Vertreter: Karakatsanis, Georgios

(57) **Zusammenfassung**

Das Verfahren zur Zugangskontrolle von Personen oder Fahrzeugen umfasst folgende Schritte :
a) Testen eines neuronalen Netzes zum Zweck der Kennzeichenerfassung für den Fall von Fahrzeugen oder zum Zweck der Identifikation einer Person anhand des zumindest einen optisch ermittelbaren biometrischen Merkmals für den Fall von Personen, wobei die Testdatensätze echte, in Echtzeit während des Betriebs des Zugangskontrollsystems gewonnene Datensätze sind, wobei solange kein vorgegebenes Konfidenzniveau erreicht wird, das neuronale Netz mit aus dem Betrieb des Zugangskontrollsystems gewonnenen Trainingsdatensätzen, trainiert wird und die Zugangskontrolle mittels zumindest eines parallel durchgeführten Verfahrens zur Zugangskontrolle durchgeführt wird;
b) bei Erreichen eines vorgegebenen Konfidenzniveaus Anhalten der Durchführung des zumindest einen parallelen Verfahrens zur Zugangskontrolle und Durchführung der Kennzeichenerfassung für den Fall von Fahrzeugen oder der Erfassung des zumindest einen optisch ermittelbaren biometrischen Merkmals einer Person für den Fall von Personen mittels des neuronalen Netzes; und
c) Ermitteln anhand des erfassten Kennzeichens bzw. anhand des biometrischen Merkmals ob in der Datenbank des Zugangskontrollsystems eine gültige Zugangsberechtigung oder eine ID, der eine gültige Zugangsberechtigung zugeordnet ist, mit dem erfassten Kennzeichen bzw. mit dem erfassten biometrischen Merkmal verknüpft ist, wobei, wenn dies der Fall ist, der Zugang gewährt wird.

## Beschreibung

Die vorliegende Erfindung bezieht sich auf ein Verfahren zur Zugangskontrolle von Personen oder Fahrzeugen in einem Zugangskontrollsystem gemäß dem Oberbegriff des Patentanspruchs 1.

Kennzeichenerfassung von Fahrzeugen wird in der Regel bei Zugangskontroll- und Mautsystemen eingesetzt. Hierbei wird anhand von Aufnahmen mittels Optical-Character-Recognition (OCR)-Verfahren das Kennzeichen der Fahrzeuge erfasst, wobei die Gestaltung der Kennzeichen sowie die verwendeten Schriftzeichen die Qualität der Kennzeichenerfassung beeinträchtigen können. Weitere Parameter, welche die Qualität der Kennzeichenerfassung beeinträchtigen können, sind die Bildqualität der Aufnahme, die Geschwindigkeit der Fahrzeuge, die Beleuchtung sowie durch Verschmutzung oder Wetterbedingungen schlecht erkennbare Kennzeichen.

Aus dem Stand der Technik ist bekannt, zur Kennzeichenerfassung von Fahrzeugen überwachtes Lernen (supervised learning) in neuronalen Netzen einzusetzen, im Rahmen dessen die Kennzeichenerfassung mittels geeigneter Trainingsdatensätze antrainiert wird; die Trainingsdatensätze umfassen jeweils eine Aufnahme eines Kennzeichens, das mittels eines Algorithmus durch das neuronale Netz berechnete Ergebnis der Kennzeichenerfassung basierend auf der Aufnahme und den korrekten Wert für das der Aufnahme zugeordnete Kennzeichen.

Bei den aus dem Stand der Technik bekannten Verfahren zur Generierung von Trainingsdatensätzen für neuromale Netze muss der korrekte Wert für das der jeweiligen Aufnahme zugeordnete Kennzeichen nach Sichtung der Aufnahmen manuell eingetragen werden, was in einem hohen Aufwand, der in der Regel 80% des Gesamtaufwandes zur Erstellung der Trainingsdatensätze entspricht, und in hohen Kosten resultiert. Das Gleiche gilt für die Generierung von Trainingsdatensätzen neuronaler Netze zu anderen Zwecken, beispielsweise zum Zweck der Personenerkennung.

Der vorliegenden Erfindung liegt die Aufgabe zugrunde, ein Verfahren zur Zugangskontrolle von Personen oder Fahrzeugen in einem Zugangskontrollsystem anzugeben, wobei einer gültigen Zugangsberechtigung für ein Fahrzeug jeweils ein Kennzeichen des Fahrzeugs und einer gültigen Zugangsberechtigung für eine Person jeweils zumindest ein optisch ermittelbares biometrisches Merkmal der Person zugeordnet ist.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zur Zugangskontrolle von Personen oder Fahrzeugen in einem Zugangskontrollsystem vorgeschlagen, wobei einer gültigen Zugangsberechtigung für ein Fahrzeug jeweils ein Kennzeichen des Fahrzeugs und einer gültigen Zugangsberechtigung für eine Person jeweils zumindest ein optisch ermittelbares biometrisches Merkmal der Person zugeordnet ist, welches folgende Schritte umfasst:
a. Testen eines neuronalen Netzes zum Zweck der Kennzeichenerfassung für den Fall von Fahrzeugen oder zum Zweck der Identifikation einer Person anhand des zumindest einen optisch ermittelbaren biometrischen Merkmals für den Fall von Personen, wobei die Testdatensätze echte, in Echtzeit während des Betriebs des Zugangskontrollsystems automatisiert gewonnene Datensätze sind, die für den Fall von Fahrzeugen jeweils zumindest eine mittels einer Kamera erstellte Aufnahme des Kennzeichens eines Fahrzeugs und für den Fall von Personen jeweils zumindest eine mittels einer Kamera erstellte Aufnahme der Person und das mittels zumindest eines parallel durchgeführten Verfahrens zur Zugangskontrolle, welches für den Fall von Fahrzeugen die Ermittlung von Fahrzeugkennzeichen und für den Fall von Personen die Identifikation der Personen und die Ermittlung des der jeweiligen Person zugeordneten zumindest eines optisch ermittelbaren biometrischen Merkmals anhand der erfassten Zugangsberechtigungen ermöglicht, ermittelte korrekte Kennzeichen des Fahrzeugs bzw. das ermittelte korrekte zumindest eine optisch ermittelbare biometrische Merkmal der Person umfassen, wobei solange kein vorgegebenes Konfidenzniveau erreicht wird, das neuronale Netz mit aus dem Betrieb des Zugangskontrollsystems automatisiert gewonnenen Trainingsdatensätzen, die jeweils für den Fall von Fahrzeugen jeweils zumindest eine mittels einer Kamera erstellte Aufnahme des Kennzeichens eines Fahrzeugs und für den Fall von Personen jeweils zumindest eine mittels einer Kamera erstellte Aufnahme der Person und das mittels zumindest eines parallel durchgeführten Verfahrens zur Zugangskontrolle, welches für den Fall von Fahrzeugen die Ermittlung von Fahrzeugkennzeichen und für den Fall von Personen die Identifikation der Personen und die Ermittlung des der jeweiligen Person zugeordneten zumindest einen optisch ermittelbaren biometrischen Merkmals anhand der erfassten Zugangsberechtigungen ermöglicht, ermittelte korrekte Kennzeichen des Fahrzeugs bzw. das korrekte zumindest eine optisch ermittelbare biometrische Merkmal der Person, und das mittels eines Algorithmus durch das neuronale Netz berechnete Ergebnis der Kennzeichenerfassung für den Fall von Fahrzeugen oder das mittels eines Algorithmus durch das neuronale Netz berechnete zumindest eine optisch ermittelbare biometrische Merkmal der Person für den Fall von Personen basierend auf der zumindest einer Aufnahme umfassen, trainiert wird und die Zugangskontrolle mittels des zumindest einen parallel durchgeführten Verfahrens zur Zugangskontrolle durchgeführt wird;
b. Bei Erreichen eines vorgegebenen Konfidenzniveaus bei der Kennzeichenerfassung für den Fall von Fahrzeugen oder der Erfassung des zumindest einen optisch ermittelbaren biometrischen Merkmals einer Person für den Fall von Personen mittels des neuronalen Netzes manuelles oder automatisches Anhalten der Durchführung des zumindest einen parallelen Verfahrens zur Zugangskontrolle und Durchführung der Kennzeichenerfassung für den Fall von Fahrzeugen oder der Erfassung des zumindest einen optisch ermittelbaren biometrischen Merkmals einer Person für den Fall von Personen mittels des neuronalen Netzes;
c. Ermitteln anhand des erfassten Kennzeichens für den Fall von Fahrzeugen oder anhand des zumindest einen optisch ermittelbaren biometrischen Merkmals einer Person für den Fall von Personen ob in der Datenbank des Zugangskontrollsystems eine gültige Zugangsberechtigung oder eine ID, der eine gültige Zugangsberechtigung zugeordnet ist, mit dem erfassten Kennzeichen für den Fall von Fahrzeugen oder dem erfassten zumindest einen optisch ermittelbaren biometrischen Merkmal einer Person für den Fall von Personen verknüpft ist, wobei, wenn dies der Fall ist, der Zugang gewährt wird.

Gemäß einer Weiterbildung der Erfindung wird auch bei Erreichen des vorgegebenen Konfidenzniveaus das neuronale Netz weiter mit aus dem Betrieb des Zugangskontrollsystems automatisiert gewonnenen Trainingsdatensätzen, die jeweils für den Fall von Fahrzeugen jeweils zumindest eine mittels einer Kamera erstellte Aufnahme des Kennzeichens eines Fahrzeugs und für den Fall von Personen jeweils zumindest eine mittels einer Kamera erstellte Aufnahme der Person und das mittels zumindest eines parallel durchgeführten Verfahrens zur Zugangskontrolle, welches für den Fall von Fahrzeugen die Ermittlung von Fahrzeugkennzeichen und für den Fall von Personen die Identifikation der Personen und die Ermittlung des der jeweiligen Person zugeordneten zumindest einen optisch ermittelbaren biometrischen Merkmals anhand der erfassten Zugangsberechtigungen ermöglicht, ermittelte korrekte Kennzeichen des Fahrzeugs bzw. das korrekte zumindest eine optisch ermittelbare biometrische Merkmal der Person, und das mittels eines Algorithmus durch das neuronale Netz berechnete Ergebnis der Kennzeichenerfassung für den Fall von Fahrzeugen oder das mittels eines Algorithmus durch das neuronale Netz berechnete zumindest eine optisch ermittelbare biometrische Merkmal der Person für den Fall von Personen basierend auf der zumindest einer Aufnahme umfassen, trainiert, wodurch die Genauigkeit der Kennzeichenerfassung bzw. der Erfassung des zumindest einen optisch ermittelbaren biometrischen Merkmals der Personen weiter verbessert wird.

Das Training des neuronalen Netzes erfolgt nach dem Stand der Technik, ist unabhängig von der Testphase während des Betriebs des Zugangskontrollsystems und kann unabhängig vom Betrieb des Zugangskontrollsystems mit während des Betriebs automatisiert generierten Trainingsdatensätzen erfolgen.

Durch die erfindungsgemäße Konzeption werden die Test- und Trainingsdatensätze in vorteilhafter Weise automatisiert erstellt, da die manuelle Eintragung des korrekten Wertes für das der jeweiligen Aufnahme zugeordnete Kennzeichen bzw. das zumindest eine optisch ermittelbare biometrische Merkmal nach Sichtung der Aufnahmen entfällt. Der korrekte Wert für das der jeweiligen Aufnahme zugeordnete Kennzeichen bzw. das der jeweiligen Aufnahme zugeordnete zumindest eine optisch ermittelbare biometrische Merkmal wird durch das zumindest eine parallel durchgeführte Verfahren zur Zugangskontrolle, welches die Ermittlung von Fahrzeugkennzeichen bzw. von optisch ermittelbaren biometrischen Merkmalen anhand der erfassten Zugangsberechtigungen ermöglicht, ermittelt und dem jeweiligen Test- oder Trainingsdatensatz zugefügt.

Die während der Testphase parallel durchgeführten Verfahren zur Zugangskontrolle, die auch der Generierung der Test- und Trainingsdatensätze dienen, sind aus dem Stand der Technik bekannte Verfahren, wobei die Test- und Trainingsdatensätze die korrekten Fahrzeugkennzeichen bzw. die korrekten optisch ermittelbaren biometrischen Merkmale umfassen, die mit den mittels dieser Verfahren erfassten Zugangsberechtigungen verknüpft und in einer Datenbank abgelegt sind. Die Fahrzeuge bzw. die Personen sind hierbei bereits im Zugangskontrollsystem registriert und die Kennzeichen bzw. die optisch ermittelbaren biometrischen Merkmale in einer Datenbank gespeichert.

Beispielsweise kann das zumindest eine parallel durchgeführte Verfahren ein Verfahren zur Zugangskontrolle sein, bei dem Zugangsberechtigungen für die Einfahrt der Fahrzeuge oder den Zugang der Personen in einen vom Zugangskontrollsystem abgedeckten Bereich oder IDs, denen Zugangsberechtigungen für die Einfahrt der Fahrzeuge oder den Zugang der Personen in den vom Zugangskontrollsystem abgedeckten Bereich zugeordnet sind, mittels des berührungslosen Auslesens der Zugangsberechtigungen oder der IDs aus einem Kundenmedium, das z.B. als mobiles elektronisches Gerät ausgeführt sein kann, über RFID, NFC, WLAN, Bluetooth, Bluetooth Low Energy, UWB oder mittels des Auslesens eines Barcodes erfasst werden. Ferner kann das parallel durchgeführte Verfahren ein Verfahren zur Zugangskontrolle sein, im Rahmen dessen mittels eines Lesegerätes Magnetstreifenkarten oder Chipkarten ausgelesen werden können, um Zugangsberechtigungen für die Einfahrt der Fahrzeuge oder den Zugang von Personen in einen vom Zugangskontrollsystem abgedeckten Bereich oder IDs, denen Zugangsberechtigungen für die Einfahrt der Fahrzeuge oder den Zugang der Personen in den vom Zugangskontrollsystem abgedeckten Bereich zugeordnet sind, zu erfassen.

Mit den direkt oder über eine ID erfassten Zugangsberechtigungen ist jeweils für den Fall von Fahrzeugen ein Fahrzeugkennzeichen oder für den Fall von Personen zumindest ein optisch ermittelbares biometrisches Merkmal verknüpft, welches in einer Datenbank abgelegt ist und nach der Erfassung der jeweiligen Zugangsberechtigung ermittelt und mit der Aufnahme des Fahrzeugs oder der Person einen Testdatensatz für das neuronale Netz bildet.

Die Durchführung des erfindungsgemäßen Verfahrens wird durch eine Steuerung gesteuert, welche über geeignete Schnittstellen mit Steuerungen zur Durchführung des zumindest eines parallel durchgeführten Verfahrens zur Zugangskontrolle verbunden ist.

Nach Erreichen des vorgegebenen Konfidenzniveaus kann die mittels des neuronalen Netzes durchführbare Kennzeichenerfassung zur Zugangskontrolle auch zur Kennzeichenerfassung von Fahrzeugen oder zur Erfassung zumindest eines optisch ermittelbaren biometrischen Merkmals von Personen durchgeführt werden, die nicht bereits registriert sind, beispielsweise um die Parkdauer eines Fahrzeugs anhand der Einfahrts- und Ausfahrtszeit oder die Aufenthaltsdauer einer Person zu ermitteln, wobei ein Fahrzeug anhand des Kennzeichens und eine Person anhand des zumindest eines optisch ermittelbaren biometrischen Merkmals identifiziert wird. Dies ist insbesondere im Rahmen eines pay-peruse Szenarios vorteilhaft.

Das Konfidenzniveau wird vorzugsweise als die Anzahl nicht oder falsch erkannter Kennzeichen oder die Anzahl nicht oder falsch erkannter optisch ermittelbarer biometrischer Merkmale in der Testphase dividiert durch die Anzahl der Testdatensätze berechnet. Die hierfür erforderlichen Daten stehen ohnehin zur Verfügung, da die korrekten Kennzeichen bzw. optisch ermittelbaren biometrischen Merkmale mittels des zumindest eines parallel durchgeführten Verfahren zur Zugangskontrolle, welches die Ermittlung von Fahrzeugkennzeichen bzw. von optisch ermittelbaren biometrischen Merkmalen anhand der erfassten Zugangsberechtigungen ermöglicht, bekannt sind.

Als optisch ermittelbares biometrisches Merkmal kann beispielsweise das Ergebnis einer biometrischen Gesichtserkennung oder einer iris-Erkennung herangezogen werden.

Durch die erfindungsgemäße Konzeption wird zudem ein neuronales Netz mit echten Datensätzen während des Betriebs eines Zugangskontrollsystems getestet, so dass keine zusätzlichen technischen Mittel zum Testen des neuronalen Netzes erforderlich sind. Ferner erfolgt die Umstellung der Zugangskontrolle auf Kennzeichenerfassung bzw. auf die Erfassung des zumindest eines optisch ermittelbaren biometrischen Merkmals anhand eines Konfidenzkriteriums, so dass die Zuverlässigkeit der Kennzeichenerfassung für den Fall von Fahrzeugen bzw. der Erfassung des zumindest einen optisch ermittelbaren biometrischen Merkmals für den Fall von Personen sowie der Zugangskontrolle gewährleistet wird.

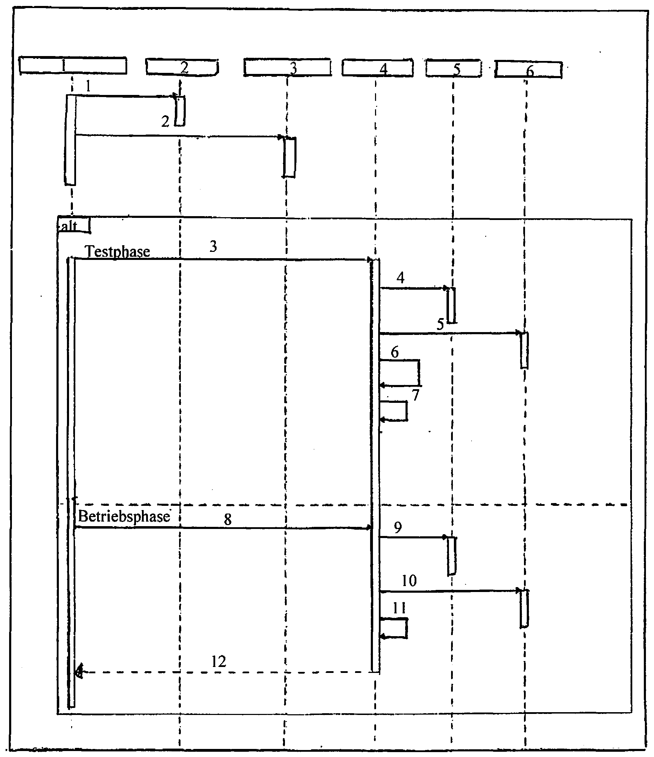

Die Erfindung wird im Folgenden anhand der beigefügten Figur, welche ein Sequenzdiagramm zur Veranschaulichung der Verfahrensschritte einer Ausgestaltung des erfindungsgemäßen Verfahrens für den Fall eines Verfahrens zur Zugangskontrolle von Fahrzeugen darstellt, beispielhaft näher erläutert.

Bezugnehmend auf die beigefügte Figur wird erfindungsgemäß im Rahmen einer Testphase des neuronalen Netzes während des normalen Betriebs eines Zugangskontrollsystems 1 in den Schritten 1 und 2 ein Fahrzeug und somit dessen mit der Zugangsberechtigung verknüpftes Kennzeichen anhand der Erfassung und Auswertung einer mit dem Fahrzeug verknüpften Zugangsberechtigung mittels eines RFID-Standards über eine RFID-Leseeinrichtung 2 (Schritt 1) oder mittels des Auslesens eines Barcodes (Schritt 2) über eine Barcode-Leseeinrichtung 3 identifiziert.

Gleichzeitig wird im Rahmen der Kennzeichenerfassung 4 während der Testphase des neuronalen Netzes (Schritt 3) mittels einer Kamera 5 eine Aufnahme des Kennzeichens des Fahrzeugs erstellt (Schritt 4) und mittels eines Algorithmus 6 des neuronalen Netzes analysiert (Schritt 5), wobei das Resultat der Auswertung der Aufnahme mit dem mittels der parallel durchgeführten Verfahren ermittelten Kennzeichen verglichen wird (Schritt 6) und anhand des Vergleichs ein Trainingsdatensatz erstellt und gespeichert wird (Schritt 7).

Gemäß der Erfindung sind die Testdatensätze echte, in Echtzeit während des Betriebs des Zugangskontrollsystems gewonnene Datensätze, die jeweils die mittels der Kamera 5 erstellte Aufnahme des Kennzeichens eines Fahrzeugs und das mittels der parallel durchgeführten Verfahren zur Zugangskontrolle ermittelte korrekte Kennzeichen des Fahrzeugs umfassen.

Dies wird so lange wiederholt bis eine vorgegebene Anzahl Trainingsdatensätze generiert wird, wobei diese Trainingsdatensätze auch zur Ermittlung des Konfidenzniveaus herangezogen werden. Ein Trainingsdatensatz umfasst die jeweils zumindest eine mittels einer Kamera erstellte Aufnahme des Kennzeichens eines Fahrzeugs, das mittels des zumindest einen parallel durchgeführten Verfahrens zur Zugangskontrolle, welches die Ermittlung von Fahrzeugkennzeichen anhand der erfassten Zugangsberechtigungen ermöglicht, ermittelte korrekte Kennzeichen des Fahrzeugs und das mittels eines Algorithmus durch das neuronale Netz berechnete Ergebnis der Kennzeichenerfassung basierend auf der zumindest einen Aufnahme.

Anschließend wird das Konfidenzniveau ermittelt, wobei, wenn ein vorgegebenes Konfidenzniveau erreicht wird, die Durchführung der parallel durchgeführten Verfahren zur Zugangskontrolle angehalten wird und die Kennzeichenerfassung zum Zweck der Zugangskontrolle mittels der Betriebsphase 8 des neuronalen Netzes durchgeführt wird (Schritte 9, 10, 11 und 12). Im Schritt 9 wird eine Aufnahme des Kennzeichens erstellt, welche im Schritt 10 analysiert wird, wobei im Schritt 11 der Algorithmus das Kennzeichen ermittelt, welches im Schritt 12 an die Steuerung des Zugangskontrollsystems übermittelt wird, um zu ermitteln, ob dem Kennzeichen eine gültige Zugangsberechtigung zugeordnet ist.

## Patentansprüche

1. Verfahren zur Zugangskontrolle von Personen oder Fahrzeugen in einem Zugangskontrollsystem, wobei einer gültigen Zugangsberechtigung für ein Fahrzeug jeweils ein Kennzeichen eines Fahrzeugs und einer gültigen Zugangsberechtigung für eine Person jeweils zumindest ein optisch ermittelbares biometrisches Merkmal der Person zugeordnet ist, welches folgende Schritte umfasst:
a) Testen eines neuronalen Netzes zum Zweck der Kennzeichenerfassung für den Fall von Fahrzeugen oder zum Zweck der Identifikation einer Person anhand des zumindest einen optisch ermittelbaren biometrischen Merkmals für den Fall von Personen, wobei die Testdatensätze echte, in Echtzeit während des Betriebs des Zugangskontrollsystems automatisiert gewonnene Datensätze sind, die für den Fall von Fahrzeugen jeweils zumindest eine mittels einer Kamera erstellte Aufnahme des Kennzeichens eines Fahrzeugs und für den Fall von Personen jeweils zumindest eine mittels einer Kamera erstellte Aufnahme der Person und das mittels zumindest eines parallel durchgeführten Verfahrens zur Zugangskontrolle, welches für den Fall von Fahrzeugen die Ermittlung von Fahrzeugkennzeichen und für den Fall von Personen die Identifikation der Personen und die Ermittlung des der jeweiligen Person zugeordneten zumindest einen optisch ermittelbaren biometrischen Merkmals anhand der erfassten Zugangsberechtigungen ermöglicht, ermittelte korrekte Kennzeichen des Fahrzeugs bzw. das ermittelte korrekte zumindest eine optisch ermittelbare biometrische Merkmal der Person umfassen, wobei solange kein vorgegebenes Konfidenzniveau erreicht wird, das neuronale Netz mit aus dem Betrieb des Zugangskontrollsystems automatisiert gewonnenen Trainingsdatensätzen, die jeweils für den Fall von Fahrzeugen zumindest eine mittels einer Kamera erstellte Aufnahme des Kennzeichens eines Fahrzeugs und für den Fall von Personen jeweils zumindest eine mittels einer Kamera erstellte Aufnahme der Person, das mittels zumindest eines parallel durchgeführten Verfahrens zur Zugangskontrolle, welches für den Fall von Fahrzeugen die Ermittlung von Fahrzeugkennzeichen und für den Fall von Personen die Identifikation der Personen und die Ermittlung des der jeweiligen Person zugeordneten zumindest einen optisch ermittelbaren biometrischen Merkmals anhand der erfassten Zugangsberechtigungen ermöglicht, ermittelte korrekte Kennzeichen des Fahrzeugs bzw. das korrekte zumindest eine optisch ermittelbare biometrische Merkmal der Person und das mittels eines Algorithmus durch das neuronale Netz berechnete Ergebnis der Kennzeichenerfassung für den Fall von Fahrzeugen oder das mittels eines Algorithmus durch das neuronale Netz berechnete zumindest eine optisch ermittelbare biometrische Merkmal der Person für den Fall von Personen basierend auf der zumindest einer Aufnahme umfassen, trainiert wird und die Zugangskontrolle mittels des zumindest einen parallel durchgeführten Verfahrens zur Zugangskontrolle durchgeführt wird;
b) Bei Erreichen eines vorgegebenen Konfidenzniveaus bei der Kennzeichenerfassung für den Fall von Fahrzeugen oder der Erfassung des zumindest einen optisch ermittelbaren biometrischen Merkmals einer Person für den Fall von Personen mittels des neuronalen Netzes manuelles oder automatisches Anhalten der Durchführung des zumindest einen parallelen Verfahrens zur Zugangskontrolle und Durchführung der Kennzeichenerfassung für den Fall von Fahrzeugen oder der Erfassung des zumindest einen optisch ermittelbaren biometrischen Merkmals einer Person für den Fall von Personen mittels des neuronalen Netzes; und
c) Ermitteln anhand des erfassten Kennzeichens für den Fall von Fahrzeugen oder anhand des zumindest einen optisch ermittelbaren biometrischen Merkmals einer Person für den Fall von Personen ob in der Datenbank des Zugangskontrollsystems eine gültige Zugangsberechtigung oder eine ID, der eine gültige Zugangsberechtigung zugeordnet ist, mit dem erfassten Kennzeichen für den Fall von Fahrzeugen oder dem erfassten zumindest einen optisch ermittelbaren biometrischen Merkmal einer Person für den Fall von Personen verknüpft ist, wobei, wenn dies der Fall ist, der Zugang gewährt wird.

2. Verfahren zur Zugangskontrolle von Personen oder Fahrzeugen in einem Zugangskontrollsystem, nach Anspruch 1, **dadurch gekennzeichnet, dass** bei Erreichen des vorgegebenen Konfidenzniveaus das neuronale Netz weiter mit aus dem Betrieb des Zugangskontrollsystems automatisiert gewonnenen Trainingsdatensätzen, die jeweils für den Fall von Fahrzeugen jeweils zumindest eine mittels einer Kamera erstellte Aufnahme des Kennzeichens eines Fahrzeugs und für den Fall von Personen jeweils zumindest eine mittels einer Kamera erstellte Aufnahme der Person und das mittels zumindest eines parallel durchgeführten Verfahrens zur Zugangskontrolle, welches für den Fall von Fahrzeugen die Ermittlung von Fahrzeugkennzeichen und für den Fall von Personen die Identifikation der Personen und die Ermittlung des der jeweiligen Person zugeordneten zumindest einen optisch ermittelbaren biometrischen Merkmals anhand der erfassten Zugangsberechtigungen ermöglicht, ermittelte korrekte Kennzeichen des Fahrzeugs bzw. das korrekte zumindest eine optisch ermittelbare biometrische Merkmal der Person, und das mittels eines Algorithmus durch das neuronale Netz berechnete Ergebnis der Kennzeichenerfassung für den Fall von Fahrzeugen oder das mittels eines Algorithmus durch das neuronale Netz berechnete zumindest eine optisch ermittelbare biometrische Merkmal der Person für den Fall von Personen basierend auf der zumindest einer Aufnahme umfassen, trainiert wird, wodurch die Genauigkeit der Kennzeichenerfassung bzw. der Erfassung des zumindest einen optisch ermittelbaren biometrischen Merkmals der Personen weiter verbessert wird.

3. Verfahren zur Zugangskontrolle von Personen oder Fahrzeugen in einem Zugangskontrollsystem, nach Anspruch 1 oder 2, **dadurch gekennzeichnet, dass** das zumindest eine parallel durchgeführte Verfahren ein Verfahren zur Zugangskontrolle ist, bei dem Zugangsberechtigungen für die Einfahrt der Fahrzeuge oder den Zugang der Personen in einen vom Zugangskontrollsystem abgedeckten Bereich oder IDs, denen Zugangsberechtigungen für die Einfahrt der Fahrzeuge oder den Zugang der Personen in den vom Zugangskontrollsystem abgedeckten Bereich zugeordnet sind, mittels des berührungslosen Auslesens der Zugangsberechtigungen oder der IDs aus einem Kundenmedium über RFID, NFC, WLAN, Bluetooth, Bluetooth Low Energy, UWB oder mittels des Auslesens eines Barcodes erfasst werden oder ein Verfahren zur Zugangskontrolle ist, im Rahmen dessen Zugangsberechtigungen für die Einfahrt der Fahrzeuge oder den Zugang der Personen in einen vom Zugangskontrollsystem abgedeckten Bereich oder IDs, denen Zugangsberechtigungen für die Einfahrt der Fahrzeuge oder den Zugang der Personen in den vom Zugangskontrollsystem abgedeckten Bereich zugeordnet sind, mittels des Auslesens von Magnetstreifenkarten oder Chipkarten erfasst werden.

4. Verfahren zur Zugangskontrolle von Personen oder Fahrzeugen in einem Zugangskontrollsystem, nach Anspruch 1, 2 oder 3, **dadurch gekennzeichnet, dass** das Konfidenzniveau als die Anzahl nicht oder falsch erkannter Kennzeichen oder optisch ermittelbarer biometrischer Merkmale in der Testphase dividiert durch die Anzahl der Testdatensätze berechnet wird.
